(19) Europäisches Patentamt
European Patent Office
Office européen des brevets

(11) **EP 0 874 915 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(51) Int Cl.[7]: **C21C 1/04**, C21C 5/36, C22B 7/04, C22B 34/12, C22B 34/22

(21) Anmeldenummer: **97932637.8**

(22) Anmeldetag: **23.07.1997**

(86) Internationale Anmeldenummer:
**PCT/AT97/00172**

(87) Internationale Veröffentlichungsnummer:
**WO 98/04750 (05.02.1998 Gazette 1998/05)**

(54) **VERFAHREN ZUM ABTRENNEN VON TITAN UND VANADIUM AUS ROHEISEN**

METHOD FOR SEPARATING TITANIUM AND VANADIUM FROM PIG IRON

PROCEDE DE SEPARATION DE TITANE ET VANADIUM CONTENUS DANS DE LA FONTE BRUTE

(84) Benannte Vertragsstaaten:
**BE DE GB SE**

(30) Priorität: **24.07.1996 AT 133596**
**06.08.1996 AT 142196**

(43) Veröffentlichungstag der Anmeldung:
**04.11.1998 Patentblatt 1998/45**

(73) Patentinhaber: **Holcim Ltd.**
**8645 Jona (CH)**

(72) Erfinder: **EDLINGER, Alfred**
**CH-5400 Baden (CH)**

(74) Vertreter: **Haffner, Thomas M., Dr.**
**Patentanwalt**
**Schottengasse 3a**
**1014 Wien (AT)**

(56) Entgegenhaltungen:
**EP-A- 0 235 291**      **DE-A- 1 758 399**
**DE-C- 878 501**        **GB-A- 2 294 255**
**US-A- 4 260 414**

- **REINHARD HÄHN: "Vanadin - Gewinnung und Verwendung" ERZMETALL., Bd. 40, Nr. 6, 1987, STUTTGART DE, Seiten 298-303, XP002045658**
- **Scaninject IV, Part. 1, S. 22:1-22:29, 1986**

## Beschreibung

Die Erfindung bezieht sich auf ein Verfahren zum gesonderten Abtrennen von Titan und Vanadium aus Roheisen

Beim Frischen von Roheisen werden eine Reihe von von Eisen verschiedenen Metallen mit Sauerstoff oxidiert und verschlackt. In der Regel werden vandiumhältige basische Stahlschlacken mit entsprechend geringem Vanadiumgehalt gewonnen. Die Rückgewinnung von Vanadium aus derartigen Schlacken gestaltet sich mit Rücksicht auf die geringen Vanadiumgehalte relativ aufwendig. Gemäß einem älteren Vorschlag der Anmelderin wurden derartige vandiumhältige Stahlschlacken mehrstufig reduziert, wobei in einer ersten Reduktionsstufe ein Resteisenoxidgehalt in der Schlacke beibehalten wurde und metallisches Eisen abgetrennt wurde. Die verbleibende Schlackenschmelze wurde in einer zweiten Reduktionsstufe mit gegenüber der ersten Reduktionsstufe größerem Reduktionspotential zu metallischem Chrom und/oder Vanadium oder deren Eisenlegierungen weiterreduziert, wobei eine hydraulisch aktive Schlacke abgetrennt werden konnte.

Für die Abtrennung von Vanadium aus Roheisen wurde bereits vorgeschlagen, zunächst Si selektiv zu oxidieren und abzutrennen. In der Folge wurde ein weiterer Schritt zur Abtrennung von P und S durch Zusatz von MgO-hältigen Einsatzstoffen vorgeschlagen, worauf in einem anschließenden dritten Schritt Alkalikarbonate und Eisenoxid, Ferrit oder Carbonate eingebracht und eine P und S-hältige Schlacke ausgetragen wurden. Anschließend wurde Vanadium unter Einsatz von Sauerstoff oxidiert, wobei naturgemäß auch eine Reihe weiterer Metalle der Oxidation unterliegen.

Aus der JP-57-63647 A ist ein Verfahren bekannt geworden, mit welchem u.a. Na, P und V aus Schlacken gewonnen werden soll. Roheisen wird hier in eine Pfanne eingeführt und Si abgetrennt. Das Metallbad wird mit Soda ($Na_2CO_3$) versetzt und Eisenoxide und Sauerstoff eingetragen, wodurch eine Entschwefelung und eine Entphosphorung gelingen soll. Die gewonnene Schlacke wird in warmes Wasser eingebracht und $CO_2$ zur Extraktion von $Na_2CO_3$, $Na_3PO_4$ und $NaVO_3$ in die wässrige Phase durchgeblasen. Aus der wässrigen Phase werden die gewünschten Produkte gefällt. Vanadium wird hier mit Ammoniumsulfat als Ammoniumvanadat gefällt.

In der Soviet Patents Abstracts, Sektion M24, Woche 9601, 26.Januar 1996, Derwent Publication Ltd. London, RU 2034031-C1 (URALS FERR METALS RES INST) ist ein Verfahren zur Gewinnung von Titan-hältiger Schlacke aus Titanmagnetit im Hochofen bekannt geworden, bei welchem eisenoxidhältige Schlacken mit Titanmagnetit geschmolzen und als Mischschlacke ausgebracht werden, wobei Roheisen gebildet wird. Gleichzeitig soll der Eisenverlust in der Hochofenschlacke verringert werden.

Scaninject IV, Part 1, Kapitel 22, Seiten 22: 1-22:29 offenbart ein Verfahren zur Abtrennung von Vanadium aus Roheisen, wobei Vanadium durch Einsatz von Eisenoxyden und/oder gasförmigen Oxyden verschlackt wird.

Die Erfindung zielt darauf ab, ein einfaches und selektives und für das jeweils zu gewinnende Metall einstufiges einfaches Verfahren zu schaffen, mit welchem unmittelbar mit Titan bzw. Vanadium angereicherte Schlacken gebildet werden können, aus welchen die Rückgewinnung des Titans bzw. des Vanadiums wesentlich leichter gelingt. Die Erfindung zielt weiters darauf ab, ein Verfahren der eingangs genannten Art zu schaffen, mit welchem ohne Modifikation von bestehenden bodenblasenden Konvertern unmittelbar mit Titan bzw. Vanadium angereicherte Schlacken mit geringem Aufwand herstellbar sind. Zur Lösung dieser Aufgabe besteht das erfindungsgemäße Verfahren im wesentlichen darin, daß das Roheisen in einem ersten Verfahrensschritt mit einer für die Verschlackung von Titan ausreichenden Menge an Eisenoxiden versetzt wird, daß Titan verschlackt und die Schlacke gewünschtenfalls abgetrennt und anschließend eine für die Verschlackung von Vanadium ausreichende Menge an Eisenoxiden zugesetzt wird und die gebildete mit Vanadium angereicherte Schlacke abgetrennt wird, wobei in der ersten und zweiten Stufe Fe-Oxide und CaO in jeweils stöchiometrischer Menge für die Umsetzung des Titans bzw. des Vanadiums im Roheisen zu $CaTiO_4$ bzw. $CaVO_4$ zugesetzt wird, und zusätzlicher Kalk in Abhängigkeit vom $SiO_2$-Gehalt der Schlacke eingesetzt wird, worauf das Roheisen zu Stahl gefrischt wird. Dadurch, daß das flüssige Roheisen mit oxidischen Eisenerzen versetzt wird, erfolgt ein mildes Frischen und Reduktion des Eisens aus den Eisenerzen, wobei Titan und in der Folge Vanadium und Silizium quantitativ verschlackt werden können. Die entsprechend geringen Schlackenmengen bestehen nahezu ausschließlich aus Titan- bzw. Vanadiumoxiden und Siliziumdioxid, wobei bei nicht ausreichender Schlackenbasizität durch Zusatz von Kalk eine basische Schlacke unter Ausbildung von Calziumtitanat bzw. Calziumvanadat und Calciumsilikaten gebildet werden kann. Diese mit Titan bzw. Vanadium hoch angereicherten basischen Schlacken können in der Folge in konventioneller Weise durch Reduktionsschritte nachbehandelt werden, womit metallisches Titan, Vanadium, Ferrotitan oder Ferrovanadium in hoher Reinheit und insbesondere kohlenstoffrei rückgewonnen werden können. Die Einstellung der Schlackenbasizität und damit die Verschlackung als Calziumtitanat bzw. Calziumvanadat gelingt in besonders einfacher Weise dadurch, daß in der ersten und zweiten Stufe Fe-Oxide und CaO in jeweils stöchiometrischer Menge für die Umsetzung des Titans bzw. des Vanadiums im Roheisen zu $CaTiO_4$ bzw. $CaVO_4$ zugesetzt wird, wobei zusätzlicher Kalk in Abhängigkeit vom $SiO_2$ Gehalt der Schlacke eingesetzt wird, wobei mit Vorteil mit dem Eisenerz Kalk zur Einstellung einer Schlackenbasizität von > 1,3 aufgegeben wird. Bei sehr geringen Ti-Gehalten im Roheisen kann eine gesonderte Abtrennung unwirtschaftlich sein. Zu diesen Fällen kann unmittelbar die Verschlackung von Vanadium erfolgen, wobei in dieser Schlacke gegebenenfalls geringe Titangehalte mitverschlackt werden. Der Einsatz von jeweils an die Ti und V-Gehalte des Roheisens angepaßten Mengen von Eisenoxid bzw. Kalk führt zu einer selektiven einstufigen Verfahrensweise, mit welcher unmittelbar die gewünschte Anreicherung erzielt wird.

Da, wie bereits erwähnt, in der ersten milden Oxidation mitRoherzen bzw. oxidischen Eisenerzen auch Silizium verschlackt wird, ist die Einstellung der gewünschten Schlackenbasizität in aller Regel nur durch einen zusätzlichen Kalksatz möglich, wobei mit Vorteil während der Verschlackung von Vanadium $Al_2O_3$ und/oder $SiO_2$ zur Einstellung der gewünschten Schlakkenviskosität zugesetzt wird.

Der weitere Frischprozeß kann in konventioneller Weise vorgenommen werden, wobei mit Vorteil so vorgegangen wird, daß im Anschluß an die Verschlackung von Vanadium und die Abtrennung der Schlacke in einem weiteren Verfahrensschritt Mn, P und Chrom durch Frischen abgebrannt und verschlackt werden. Durch die fraktionierte Oxidation in einem mehrstufigen Frischprozeß gelingt es, eine Reihe von Metallen selektiv aus dem Roheisen abzuscheiden, wobei mit Rücksicht auf den Abbrand des Siliziums in der vorangehenden Verschlackung diese weiteren Schlacken kaum Siliziumoxid enthalten. Es kann somit sinnvoll und erforderlich sein, zur Einstellung der gewünschten Schlackenviskosität auch hier während der weiteren Verfahrensschritte $Al_2O_3$ und/oder $SiO_2$ zuzusetzen.

An eine derartige weitere Stufe kann unter Abtrennung einer phosphor- und manganhältigen Schlakke eine von den genannten Metallen freie Stahlwerksschlacke gebildet werden, welche sich in der Folge besonders für weitere Aufbereitungen und insbesondere als Ausgangsprodukt für die Herstellung von Düngemitteln [Thomasmehl $(Ca_3(PO_4)_2)$], hydraulischen Bindemitteln oder hydraulischen Bindemittelzusätzen eignet. Durch das gestufte Frischen gelingt es, in der ersten Stufe Titan und/oder Vanadium selektiv zu verschlakken, worauf anschließend Chrom, Mangan und Phosphor verschlackt werden können. Das mehrstufige Frischverfahren erlaubt es somit, unter Ausbildung geringster Schlackenmenge die jeweils in der Endschlakke unerwünschten Bestandteile abzutrennen, wobei vor allen Dingen der Vorteil der Rückgewinnung von Wertstoffen wie Titan bzw. Vanadium wesentlich einfacher als bei den bekannten Verfahren gelingt.

Das Verfahren kann durch die relativ einfache Einstellbarkeit der Schlackenviskosität bei relativ tiefen Temperaturen knapp über dem Liquiduspunkt des Metallbades durchgeführt werden, wobei ein Großteil der benötigten Wärme für die Überhitzung der Schlacke unmittelbar aus dem Frischprozeß gewonnen werden kann. Gleichzeitig wird in der ersten Stufe zusätzlich Eisenoxid aus den oxidischen Erzen zu Roheisen umgesetzt, sodaß die Eisenbilanz des Prozesses wesentlich verbessert werden kann.

Die Umsetzung der Endschlacken zur Herstellung von Zementklinker und Spezialbinderqualitäten mit hohem α-Belit-Gehalt und hoher Endfestigkeit kann in beliebiger Weise erfolgen. So ist es beispielsweise möglich, flüssige Schlacken aus Reduktionsprozessen und Stahlwerksprozessen miteinander zu vermischen, wobei aufgrund der exothermen Neutralisationsreaktion auch dieser Prozeß weitestgehend autotherm geführt werden kann. Ein nachgeschalteter Reduktionsvorgang, beispielsweise über einem Eisenbad, kann in der Folge in einfacher Weise einstufig ausgeführt werden, da ja die eingangs genannten Metalle bereits zuvor selektiv verschlackt und mit relativ geringer Schlackenmenge ausgetragen werden konnten.

Vanadiumhältige Stahlwerksschlacken enthalten typischerweise 2 bis 6 Gew.% $V_2O_5$. Die erfindungsgemäße Anreicherung des Vanadiums am Beginn des Frischprozesses führt zu einer Schlacke, deren Vanadiumgehalt über 32 Gew.% betragen kann. Mit Rücksicht auf die bereits erfolgte Abtrennung von Metallen wie Titan, Vanadium und in der Folge Chrom oder Mangan kann ein nachgeschalteter Reduktionsschritt für die Nachbehandlung der Stahlwerksschlacken bei gleichfalls verringerten Temperaturen durchgeführt werden, wodurch sich energetische Vorteile ergeben.

In besonders einfacher Weise kann aber bereits mit Ti und V angereichertes Roheisen eingesetzt werden, wobei bevorzugt Roheisen, welches durch vollständige Reduktion von LD-Schlacken gebildet wurde, eingesetzt wird.

Die Verschlackung von Titan und Vanadium unter Einhaltung der Bedingungen für eine rasche und selektive Oxidation gelingt besonders sicher und selektiv in einem bodenblasenden Konverter.

Die Rückgewinnung und insbesondere die kohlenstofffreie Rückgewinnung von Vanadium aus der gebildeten Schlacke gelingt vorteilhaft unter Verwendung von Fe/Si oder Al als Reduktionsmittel.

Ausführungsbeispiel:

Für die Verschlackung von V gelten folgende Grundreaktionen:

$$Fe_2O_3 + 2V \rightarrow V_2O_3 + 2Fe$$

$$V_2O_3 + CaO \rightarrow CaV_2O_4$$

In 1 t Roheisen sind 3 kg Vanadium gelöst. Um dieses Vanadium in die Schlacke einzubringen, werden 4,71 kg Eisenerz benötigt. Es entstehen dabei 4,41 kg $V_2O_3$ sowie 3,3 kg zusätzliches Eisen.

Um 4,41 kg $V_2O_3$ zu verschlacken, werden 1,65 kg Branntkalk benötigt. Pro t Roheisen entstehen somit 6 kg Vanadiumschlacke ($CaV_2O_4$). Um diese Schlacke flüssig zu halten, werden 20 % $Al_2O_3$ zugesetzt. Somit entstehen pro t Roheisen 7,6 kg Vanadium-Endschlacken.

Falls der Abzug dieser sehr geringen spezifischen Schlackenmengen aus dem Konverter Schwierigkeiten macht, kann diese durch Zugabe von Branntkalk, Bauxit und/oder Quarzsand, trockenem Ton, aschehaltigem Kohlenstoff-Träger etc. erhöht werden. Allerdings sinkt dann die Vanadiumkonzentration entsprechend ab.

Die Vanadiumschlacke setzt sich wie folgt zusammen:

| Komponente | Anteil (Gew.%) |
|---|---|
| CaO | 22 |
| $V_2O_3$ (V) | 58 (39) |
| $Al_2O_3$ | 20 |

Diese bei 1380° C dünnflüssige Vanadiumschlacke eignet sich extrem gut für die Reduktion mittels FeSi/Al im Induktionstiegelofen (Hoch-Mittelfrequenz).

Pro t Rohschlacke entstehen 7,6 kg Vanadiumschlacke. In einem 120 t bodenblasenden Konverter entstehen somit pro Charge 812 kg Vanadiumschlacke, wobei die Hilfsstoffe eingedüst werden.

Diese Vanadiumschlacke wird einem Schlackensammler zugeführt, um

- mitgeschlepptes Roheisen abzusetzen
- ein genügendes Schlackenvolumen für den Vanadium-Reaktor anzusammeln.

Die Schlackenreduktion im V-Reaktor geschieht vorteilhafterweise über einem mit Argon geführten FeSi/Al-Bad diskontinuierlich. Der V-Anteil der Ferro-Vanadium-Legierung wird also über die Mengenverhältnisse von Si und Al im kohlenstoff-freien Eisenbad kontrolliert.

Die Eisenbad-Temperatur liegt zwischen 1500 und 1900° C, abhängig von der zu bildenden Fev-Legierung und der Endschlacke.

Im vorliegenden Fall wurde Al dem Eisenbad als Reduktionsmittel zugeführt.

Pro t Vanadiumschlacke müssen 209 kg Al dem Eisenbad zugeführt werden. Daraus entstehen dann 390 kg Vanadium und es verschlacken 393 kg $Al_2O_3$.

Aus 1 t Vanadiumschlacke entstehen daher 813 kg Endschlacke mit 27 % CaO und 73 % $Al_2O_3$. Diese Zusammensetzung entspricht einem höchstwertigen "Feuerfest-Beton" ("Castable")-Grundmaterial.

Falls FeSi (Si) als Reduktionsmittel eingesetzt wird, kann hochwertiger "Tonerde-Schmelz-Zement" erhalten werden. Abhängig von Al/Si-Verhältnis können die verschiedensten Qualitäten erhalten werden.

Die FeV-Legierung enthält etwa zu 50 % V.

**Patentansprüche**

1. Verfahren zum gesonderten Abtrennen von Titan und Vanadium aus Roheisen, **dadurch gekennzeichnet, daß** das Roheisen in einem ersten Verfahrensschritt mit einer für die Verschlackung von Titan ausreichenden Menge an Eisenoxiden versetzt wird, **daß** Titan verschlackt und die Schlacke gewünschtenfalls abgetrennt und anschließend eine für die Verschlackung von Vanadium ausreichende Menge an Eisenoxiden zugesetzt wird und die gebildete mit Vanadium angereicherte Schlacke abgetrennt wird, wobei in der ersten und zweiten Stufe Fe-Oxide und CaO in jeweils stöchiometrischer Menge für die Umsetzung des Titans bzw. des Vanadiums im Roheisen zu $CaTiO_4$ bzw. $CaVO_4$ zugesetzt wird, und zusätzlicher Kalk in Abhängigkeit vom $SiO_2$ Gehalt der Schlacke eingesetzt wird, worauf das Roheisen zu Stahl gefrischt wird.

2. Verfahren nach Anspruch 1, **dadurch gekennzeichnet, daß** mit dem Eisenerz Kalk zur Einstellung einer Schlackenbasizität von > 1,3 aufgegeben wird.

3. Verfahren nach Anspruch 1 oder 2, **dadurch gekennzeichnet, daß** im Anschluß an die Verschlackung von Vanadium und die Abtrennung der Schlacke in einem weiteren Verfahrensschritt Mn, P und Chrom durch Frischen abgebrannt und verschlackt werden.

4. Verfahren nach einem der Ansprüche 1 bis 3, **dadurch gekennzeichnet, daß** während der Verschlackung von Vanadium $Al_2O_3$ und/oder $SiO_2$ zur Einstellung der gewünschten Schlackenviskosität zugesetzt wird.

5. Verfahren nach einem der Ansprüche 1 bis 4, **dadurch gekennzeichnet, daß** die Verschlackung von Titan und Vanadium in einem bodenblasenden Konverter vorgenommen wird.

6. Verfahren nach einem der Ansprüche 1 bis 5, **dadurch gekennzeichnet, daß** ein durch Reduktion von LD-Schlacke gebildetes Roheisen eingesetzt wird.

7. Verfahren nach einem der Ansprüche 1 bis 6, **dadurch gekennzeichnet, daß** die vanadiumhältige Schlacke mit Fe/Si oder Al zu einer Ferrovanadiumlegierung reduziert wird.

**Claims**

1. A method for separately separating titanium and vanadium from pig iron, **characterized in that** the pig iron in a first method step is mixed with an iron oxide quantity sufficient for the slagging of titanium, that titanium is slagged and the slag is separated, if desired, and, after this, an iron oxide quantity sufficient for the slagging of vanadium is added and the formed slag enriched with vanadium is separated, wherein both in the first and in the second step Fe oxides and CaO are each added in stoichiometric amounts to convert the titanium and vanadium contained in the pig iron to $CaTiO_4$ and $CaVO_4$, respectively, and additional lime is used as a function of the $SiO_2$ content of the slag, whereupon the pig iron is refined to steel.

2.  A method according to claim 1, **characterized in that**, along with iron ore, lime is charged to adjust a slag basicity of >1.3.

3.  A method according to claim 1 or 2, **characterized in that**, following the slagging of vanadium and the separation of the slag, Mn, P and chromium in a further method step are burned off by refining and slagged.

4.  A method according to any one of claims 1 to 3, **characterized in that** $Al_2O_3$ and/or $SiO_2$ are added during the slagging of vanadium in order to adjust the desired slag viscosity.

5.  A method according to any one of claims 1 to 4, **characterized in that** the slagging of titanium and vanadium is effected in a bottom-blowing converter.

6.  A method according to any one of claims 1 to 5, **characterized in that** pig iron formed by the reduction of LD slag is used.

7.  A method according to any one of claims 1 to 6, **characterized in that** the vanadium-containing slag is reduced to a ferrovanadium alloy by the aid of Fe/Si or Al.

**Revendications**

1.  Procédé pour séparément separer de la fonte brute, le titane et le vanadium y contenus, **caractérisé en ce que** la fonte brute, dans une première étape du procédé, est mélangée avec une quantité d'oxydes de fer suffisante pour la scorification du titane, le titane est scorifié et la scorie est séparée si l'on désire, et, ensuite, une quantité d'oxydes de fer suffisante pour la scorification du vanadium est ajoutée et la scorie formée et enrichie de vanadium est séparée, cependant que, dans la première et la deuxième étape, des oxydes de fer et du CaO sont ajoutés chacun en quantité stoechiométrique pour la conversion du titane respectivement du vanadium contenu dans la fonte bruteen $CaTiO_4$ et $CaVO_4$, et de la chaux additionelle est utilisée en fonction de la teneur de $SiO_2$ dans la scorie, après quoi la fonte brute est affinée pour obtenir de l'acier.

2.  Procédé selon la revendication 1, **caractérisé en ce que** de la chaux est chargée conjointement avec le minerai de fer pour ajuster une basicité de scorie de > 1,3.

3.  Procédé selon la revendication 1 ou 2, **caractérisé en ce qu'**à la suite de la scorification du vanadium et la séparation de la scorie, Mn, P et du chrome, dans une autre étape du procédé, sont consumés par le feu au cours d'un affinage et scorifiés.

4.  Procédé selon l'une des revendications 1 à 3, **caractérisé en ce que** $Al_2O_3$ et/ou $SiO_2$ sont ajoutés pendant la scorification du vanadium pour ajuster la basicité de scorie désirée.

5.  Procédé selon l'une des revendications 1 à 4, **caractérisé en ce que** la scorification du titane et du vanadium est effectuée dans un convertisseur à soufflage par le fond.

6.  Procédé selon l'une des revendications 1 à 5, **caractérisé en ce que** de la fonte brute formé par la réduction de la scorie L.D. est utilisée.

7.  Procédé selon l'une des revendications 1 à 6, **caractérisé en ce que** la scorie contenant du vanadium est réduite par Fe/Si ou Al pour former un alliage ferro-vanadium.